# EUROPEAN PATENT SPECIFICATION

(11) **EP 1 766 843 B1**
(45) Date of publication and mention of the grant of the patent: **09.09.2015**
(21) Application number: 05763105.3
(22) Date of filing: 01.07.2005
(51) Int. Cl.: H04L 9/00, H04N 7/167, H04N 21/266, H04N 21/4623, H04N 21/2347, H04N 21/235, H04N 21/435, H04N 21/4408, H04L 29/06, H04N 21/643, H04L 12/18, H04W 4/06, H04W 12/04, H04W 4/00

(54) **Methods and devices for managing traffic keys during a multi-media session**
Verfahren und Vorrichtungen zur Verwaltung von Verkehrsschlüsseln während einer Multimedia-Sitzung
Procédés et dispositifs pour la gestion de clés de trafic durant une session multimédia

(30) Priority: 09.07.2004 US 888349
(43) Date of publication of application: 28.03.2007
(73) Proprietor: Nokia Technologies Oy, 02610 Espoo (FI)
(72) Inventor: PAILA, Toni, FIN-10160 Degerby (FI); KARRAS, Timo, FIN-02270 Espoo (FI); JYSKE, Eero, FIN-01300 Vantaa (FI); LAHTINEN, Pekka, FIN-00210 Helsinki (FI); MULLER, Dominique, FIN-00100 Helsinki (FI)
(74) Representative: Derry, Paul Stefan
(86) International application number: PCT/IB2005/001899
(87) International publication number: WO 2006/008596

(56) References cited:
- WO-A1-2004/032410
- WO-A2-03/005145
- WO-A2-03/059039
- US-A- 5 787 172
- US-A1- 2002 021 809
- US-A1- 2003 081 776
- US-A1- 2004 181 666
- US-A1- 2005 094 812
- US-A1- 2005 100 167
- "Digital Video Broadcasting (DVB); DVB specification for data broadcasting; Final draftETSI EN 301 192", IEEE, LIS, SOPHIA ANTIPOLIS CEDEX, FRANCE, vol. BC, no. V1.4.1, 1 June 2004 (2004-06-01), XP014015280, ISSN: 0000-0001
- "IP datacast baseline specification; specification of interface I MT DVB document A080", DIGITAL VIDEO BROADCASTING, XX, XX, 1 April 2004 (2004-04-01), pages 1-37, XP002987312,
- "Digital Video Broadcasting (DVB); DVB SimulCrypt; Head-end architecture and synchronization; ETSI TS 101 197", IEEE, LIS, SOPHIA ANTIPOLIS CEDEX, FRANCE, vol. BC, no. V1.2.1, 1 February 2002 (2002-02-01), XP014006034, ISSN: 0000-0001
- KENT BBN TECHNOLOGIES S: "IP Encapsulating Security Payload (ESP); draft-ietf-ipsec-esp-v3-08.txt", 20040301, vol. ipsec, no. 8, 1 March 2004 (2004-03-01), XP015020896, ISSN: 0000-0004

## Description

### FIELD OF THE INVENTION

This invention relates to delivering protected multi-media content. In particular, the invention provides apparatuses and methods for providing encryption keys with the associated content.

### BACKGROUND OF THE INVENTION

Video streaming, data streaming, and broadband digital broadcast programming are increasing in popularity in wireless network applications, e.g., Internet Protocol (IP) multicast services. To support these wireless applications, wireless broadcast systems transmit data content that support data services to many wireless terminals simultaneously. Digital media content or other data is broadcasted using various application protocols, transport protocols and network protocols. For example, a broadcast system provides IP data broadcast where audio-visual service is transmitted so that MPEG4-AVC video, MPEG4-AAC audio and auxiliary data components are packetized and encapsulated to RTP and/or ALC. The packets are subsequently formatted to UDP and IP and transmitted over MPE in MPEG2-TS (for example DVB-H). In a packet-switched domain, the concept of a multi-media session may require that one or more session components (audio, video and auxiliary data in above case) are logically bound together. The portions of the multi-media session are sent between a common start time and end time. However, with a broadcast environment all receivers that are able to receive the broadcast signal can receive the data carried by the broadcast signal. It is important that the content seller limits access to multi-media content so that only entitled receivers can present the multi-media content to users.

In order to enhance revenue collections, a user is often permitted to access premium multi-media services only if the user subscribes to the service or orders the service (e.g., pay per view). However, without effectively controlling access by the content seller, a user may access the content without paying for the content if the user bypasses the protection mechanism.

What are needed are apparatuses, methods, and systems that facilitate adequate control procedures that effectively limit access to multi-media content.

### BRIEF SUMMARY OF THE INVENTION

The invention is defined by the claims.

### BRIEF DESCRIPTION OF THE DRAWINGS

A more complete understanding of the present invention and the advantages thereof may be acquired by referring to the following description in consideration of the accompanying drawings, in which like reference numbers indicate like features and wherein:
Figure 1 shows transmission of Internet Protocol (IP) services utilizing time slice transmission in accordance with an embodiment of the invention;
Figure 2 shows a protocol stack that supports transmission of multi-media data in accordance with an embodiment of the invention;
Figure 3 shows a component configuration for a multi-media session according to an embodiment of the invention;
Figure 4 shows a component configuration for a multi-media session shown according to an embodiment of the invention;
Figure 5 shows a variation of the component configuration shown in Figure 4 according to an embodiment of the invention;
Figure 6 shows a variation of the component configuration shown in Figure 4 according to an embodiment of the invention;
Figure 7 shows a variation of the component configuration shown in Figure 4 according to an embodiment of the invention;
Figure 8 shows a procedure for receiving a multi-media session in accordance with an embodiment of the invention;
Figure 9 shows a flow diagram for the architecture shown in Figure 8 in accordance with an embodiment of the invention;
Figure 10 shows a system for protected content transfer that supports DVB-H IPDC (IP datacast) services according to prior art;
Figure 11 shows a system that supports DVB-H IPDC services in accordance with an embodiment of the invention;
Figure 12 show a flow diagram for transmitting data for DVB-H IPDC services in the system shown in Figure 11 in accordance with an embodiment of the invention;
Figure 13 shows a system that supports DVB-H IPDC services in accordance with an embodiment of the invention;
Figure 14 shows a system that supports DVB-H IPDC services in accordance with an embodiment of the invention;
Figure 15 shows an apparatus for that supports a transmission module as shown in Figures 11, 13 and 14 in accordance with an embodiment of the invention;
Figure 16 shows an apparatus that receives a multi-media broadcast and that applies IPSec keys in accordance with an embodiment of the invention;
Figure 17 shows an apparatus that receives a multi-media broadcast and that decrypts the IPSec keys in accordance with an embodiment of the invention; and
Figure 18 shows a system for deploying a security plug-in software module in accordance with an embodiment of the invention.

### DETAILED DESCRIPTION OF THE INVENTION

In the following description of the various embodiments, reference is made to the accompanying drawings which form a part hereof, and in which is shown by way of illustration various embodiments in which the invention may be practiced. It is to be understood that other embodiments may be utilized and structural and functional modifications may be made without departing from the scope of the present invention as defined by the claims.

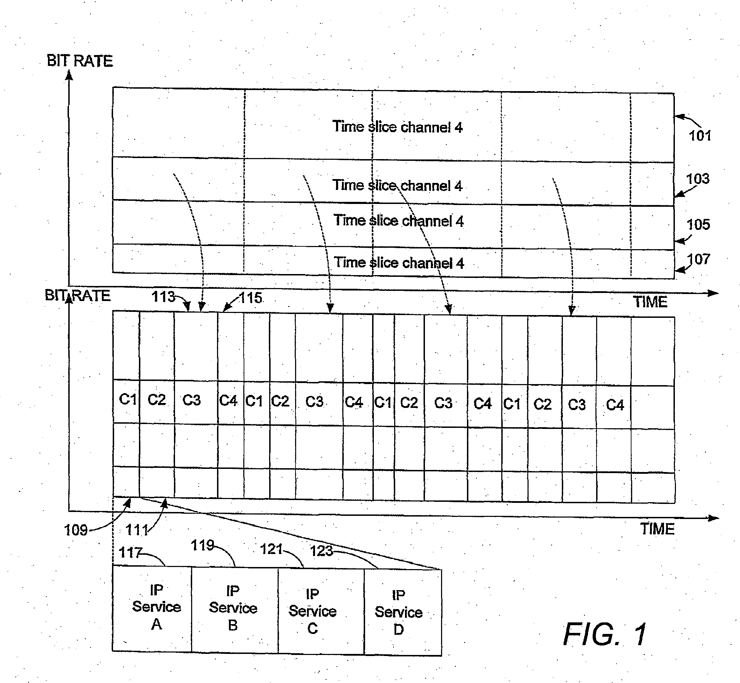

Figure 1 shows transmission of Internet Protocol (IP) services utilizing time slice transmission in accordance with an embodiment of the invention. A base station broadcasts data packets for a plurality of IP services using data streams 101, 103, 105, and 107. (Each data stream is allocated a portion of a data rate capacity.) In the embodiment, the base station may support functionality that is typically assumed by a base transceiver station (BTS), a base station controller (BSC), a combination of a BTS and a BSC, and a node B, which is a third Generation (3G) designation of a base transceiver station. Data transmission is essentially continuous such that data packets for an IP service are continuously being conveyed through a data stream.

In order to mitigate the loss of data packets, data streams 101, 103, 105, and 107 are mapped by base stations into bursts of data packets 109, 111, 113, and 115, respectively, in which bursts are transmitted over radio channels rather than data streams 101, 103, 105, and 107. Each data stream (101, 103, 105, and 107), and consequently each burst (109, 111, 113, and 115), supports at least one data service. Thus, each burst may support a plurality of data services (e.g., a group of related data services).

Data rates associated with bursts 109, 111, 113, and 115 are typically greater than data rates that are associated with data streams 101, 103, 105, and 107 so that a corresponding number of data packets can be sent in a shorter amount of time. In the embodiment, data streams 101, 103, 105, and 107 correspond to continuous data rates of approximately 100 Kbit/sec. Bursts 109, 111, 113, and 115 typically correspond to approximately 4 Mbit/sec (but may be in excess of 10 Mbit/sec) with an approximate one second duration. However, other embodiments may use different data rates for data streams 101-107 and for bursts 109-115.

In the embodiment, the entire data rate capacity is allocated to a burst at a given time. As shown in Figure 1, bursts 109, 111, 113, and 115 are interleaved in time. An idle time duration (during which data packets are not transmitted for the particular data service) occurs between consecutive transmissions of a burst (e.g., burst 109). A wireless broadcast system can utilize the idle time duration during which the wireless terminal can be instructed to transfer to another base station to complete a handover. The other base station may transmit the same data as the base station previously serving the wireless terminal using a different center frequency and a different amount of phase shift. The utilization of time slicing enables a terminal to reduce the consumption of electrical power that is provided by a power source (typically a battery).

Bursts are typically transmitted periodically by a base station. For example, a subsequent burst may occur T seconds after burst 109, in which a burst is transmitted ever T seconds. The wireless terminal may maintain precise timing, as with the Global Positioning System (GPS), to determine an absolute time at which each burst occurs. In another embodiment, the wireless terminal is provided information about a time period in each burst, informing the wireless terminal about the subsequent burst. With an embodiment of the invention, the time period information includes a real-time parameter (corresponding to "delta-t" with DVB-H) that indicates a time interval from the beginning of a time slice burst to the beginning of the next time slice burst of the same service and that is signaled in a MPE section header. The time period may be included in an IP packet, a multiprotocol encapsulated frame, any other packet frame, and a third generation (3G) or General Packet Radio Service (GPRS) channel or modulation data, such as transmitter parameter signaling. Alternatively, the wireless terminal may detect an occurrence of a burst by receiving a signal preamble, which may be a data sequence that is known a priori to the wireless terminal. In another embodiment, the wireless terminal may receive an overhead message on an overhead channel from a base station. The overhead message may contain timing information regarding the occurrence of bursts. The overhead channel may be logically or physically distinct from the downlink radio channel that supports the transmission of bursts.

Bursts 109, 111, 113, and 115 may be formatted by using a multi-protocol encapsulation in accordance with Section 7 of European Standard EN 301 192 "Digital Video Broadcasting (DVB), DVB specification for data broadcasting." The encapsulation may conform to Internet Protocol (IP) standards.

In an embodiment of the invention, a Digital Video Broadcast (DVB-H) provides mobile media services to wireless terminals, e.g., handheld wireless units. In the embodiment, the DVB-H system is compatible with DVB-T (digital video broadcast for terrestrial operation) and supports enhancements to better support operation of wireless handheld terminals. The DVB-H system supports Internet Protocol (IP) based data services in which the information may be transmitted as IP datagrams. The DVB-H system incorporates enhancements (with respect to a DVB-T system) that facilitates access to IP based DVB services on wireless handheld wireless terminals. (Alternative embodiments of the invention support variations of digital video broadcast systems including DVB-T, ATSC, and ISDB-T.) The DVB-H enhancements are based on the physical layer of the DVB-T physical layer with a number of service layer enhancements aimed at improving battery life and reception in the handheld environment. Thus, the DVB-H enhancements compliment existing digital terrestrial services, offering service providers the possibility to extend the market to the wireless handheld market.

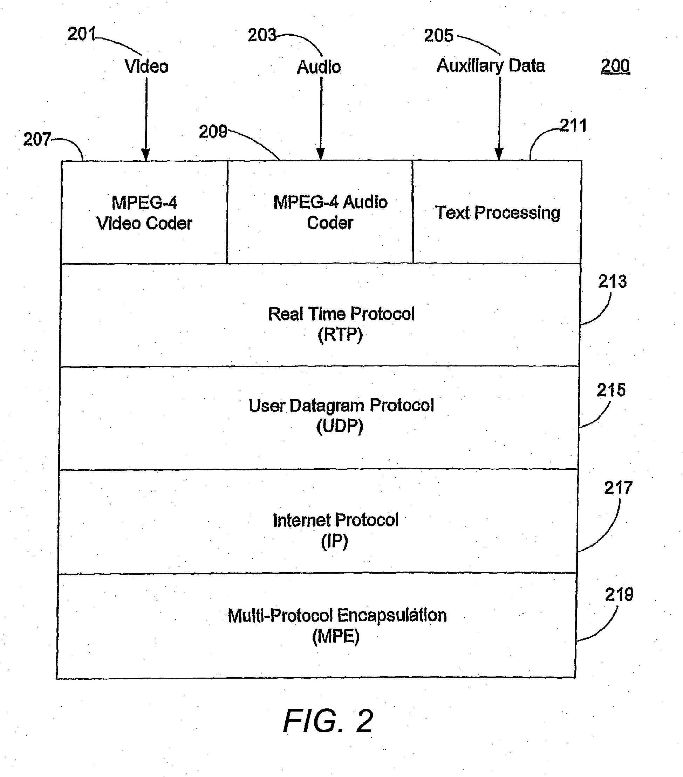

Figure 2 shows an internet protocol (IP) stack 200 that supports transmission of multi-media data in accordance with an embodiment of the invention. Digital media content or other data is broadcasted using various application protocols, transport protocols and network protocols. With IP stack 200, an IP data broadcast supports an audio-visual service having MPEG4-AVC video 201, MPEG4-AAC audio 203 and auxiliary data 205 components. Each component (201, 203, or 205) is processed by coder 207, coder 209, or coder 211 in order to obtain packets that are formatted for Real Time Protocol (RTP) layer 213. The packets (datagrams) are subsequently processed by UDP (user datagram protocol) layer 215 and Internet Protocol (IP) layer 217. Datagrams are associated with time slice bursts by formatting the datagrams using a multi-protocol encapsulation (typically corresponding to a link layer in the OSI model) such as, for example, in accordance with Section 7 of European Standard EN 301 192 "Digital Video Broadcasting (DVB), DVB specification for data broadcasting." The encapsulation may conform to Internet Protocol (IP) standards.

A multi-media session typically is associated with one or more session components (audio, video and auxiliary data in above case) that are logically bound together. The parts of the session are sent between a common start time and end time. Both start time and/or end time of can be either defined or undefined.

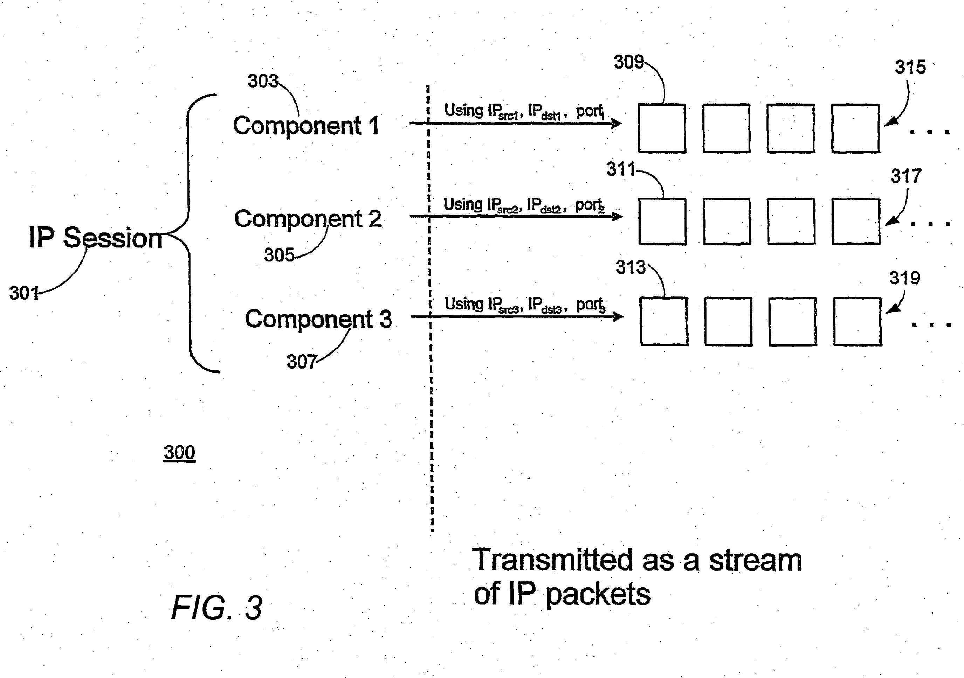

Figure 3 shows a component configuration 300 for a multi-media session 301 according to an embodiment of the invention. Component 303 corresponds to a plurality of datagrams (including datagrams 309 and 315); component 305 corresponds to a plurality of datagrams (including datagrams 311 and 317); and component 307 corresponds to a plurality of datagrams (including datagrams 313 and 319). Components 303, 305, and 307 are transmitted within IP packets that are encapsulated to messaging of an underlying bearer layer. Each component 303, 305, and 307 has a defined source IP address, destination IP address, and port used in the IP packets that carry data associated with the component. Different components may have an independently defined source IP address, a destination IP address, and a port. In variations of the embodiment, a multi-media session may have a different number of components.

While exemplary component configuration 300 shows datagram alignment between components 303, 305, 307, the embodiment supports configurations in which the datagrams are not aligned and the number of datagrams for each component is different from that of the other components. For example, the number of datagrams for an audio component is typically less than the number of datagrams for a video component during a given time interval.

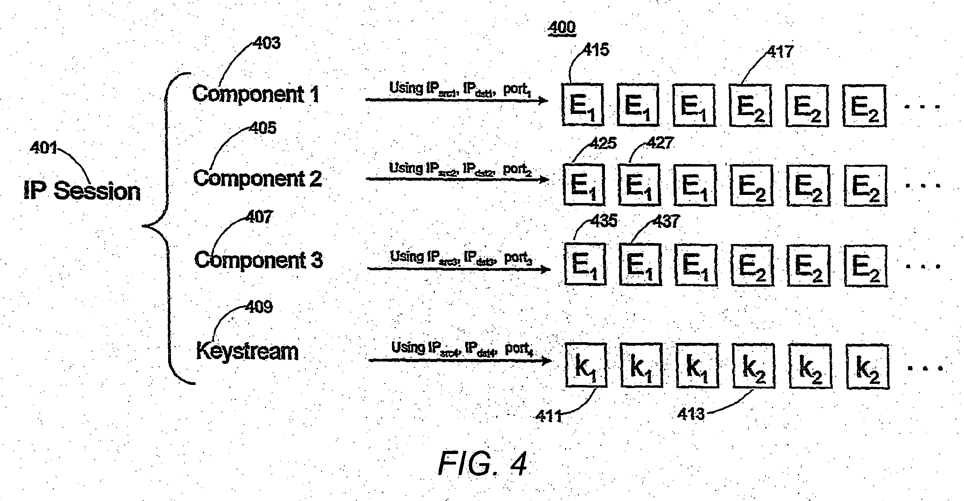

Figure 4 shows a component configuration 400 for a multi-media session 401 according to an embodiment of the invention. Components 403, 405, and 407 are encrypted with the same key that changes periodically in keystream 409 during multi-media session, 401. (In Figures 4-16, a datagram that is encrypted with key kᵢ is denoted as Eᵢ. (Keystream 409 is a logical channel that contains key information and that is separate from the media components.) Similarly, a datagram associated with the j^{th} component and that is encrypted with the i^{th} key associated with the j^{th} component is denoted as Eⱼᵢ.) The embodiment supports different encryption methods that are applied to component 403, 405, or 407, including:
- IPSEC-ESP (so called IP-level encryption; see RFC on IPSEC-ESP).
- Payload of the application session packet encrypted (for example SRTP or DCF of OMA DRM 1.0 or 2.0)
- Encryption

The above encryption methods may be applied separately or in combination during multi-media session 401. Components 403, 405, and 407 correspond to a different plurality of content datagrams. Keystream 409 includes a plurality of associated datagrams, each associated datagram corresponding to an encryption key. Encryption is typically performed on an individual datagram (e.g., packet) basis. For example, content datagrams 415, 425, 427, 435, and 437 are encrypted with key k₁ (corresponding to associated datagram 411) and content datagram 417 is encrypted with k₂ (corresponding to associated datagram 413).

Keystream 409 utilizes a delivery protocol such as RTP, ALC/FLUTE, UHTTP, DVBSTP, IP with a payload, and UDP with a payload. The keys delivered in keystream 409 are typically protected by another key that the entitled receiver has in order to access the contents of keystream 409 that carries keys, thus enabling access to the components 403, 405, and 407. The delivery of keystream 409 is optionally, synchronized with components 403, 405, and 407, e.g., RTP timestamps with the use of RTP Control Protocol).

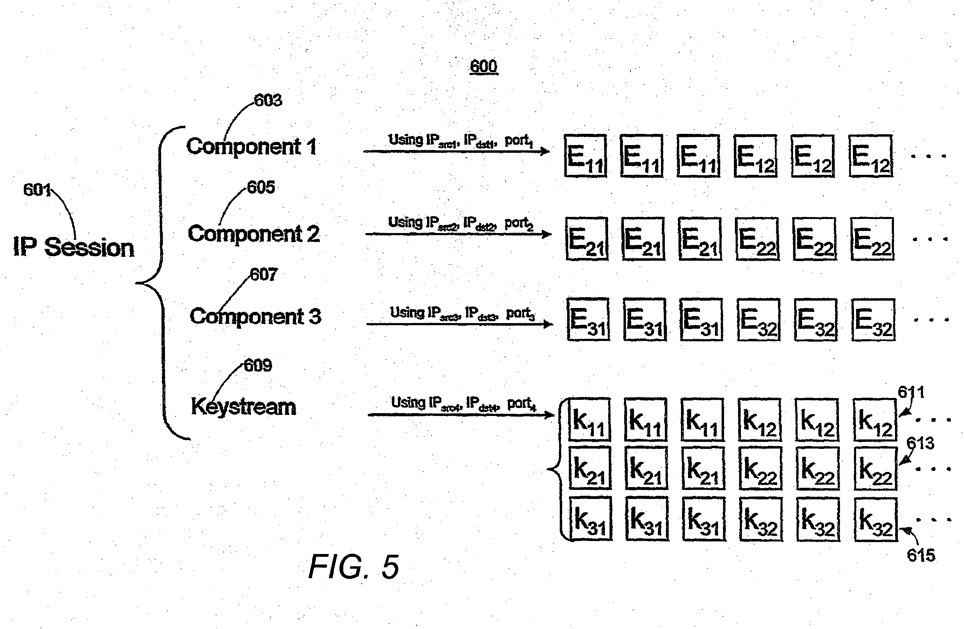

Figure 5 shows a variation of the component configuration shown in Figure 4 according to an embodiment of the invention. Component configuration 600 is similar to component configuration 400. However, keystream 609 includes three series of keys 61, 613, and 615 that correspond to components 603, 605, and 607, respectively. The keys may change periodically but independently during multi-media session 601 but may be synchronized with each other.

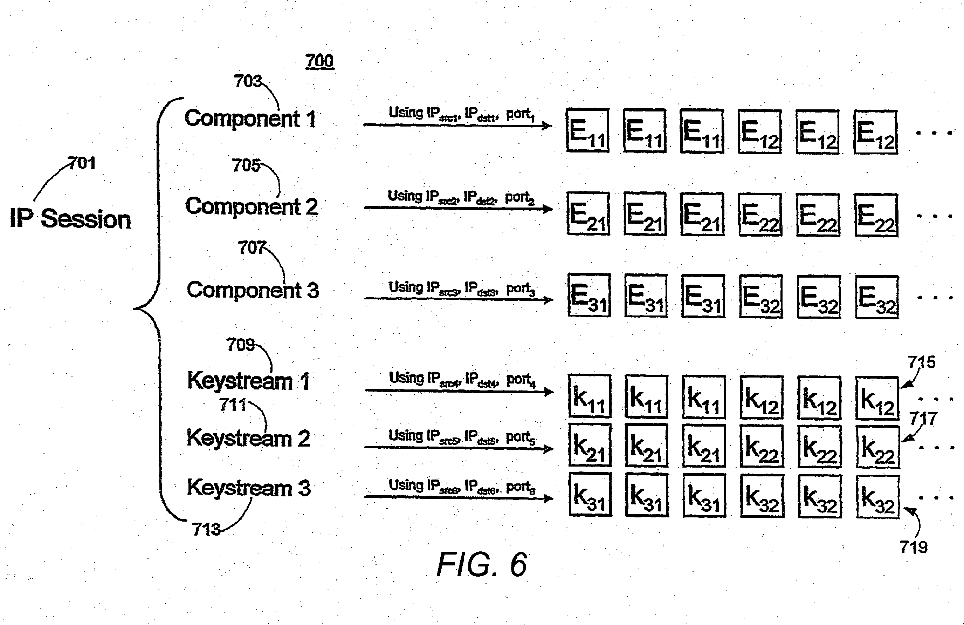

Figure 6 shows a variation of the component configuration shown in Figure 4 according to an embodiment of the invention. Component configuration 700 is similar to component configuration 600 except that keys for each component are carried on different keystreams that change during multi-media session 701. Rather than having one keystream, component configuration 700 utilizes three keystreams 709, 711, and 713. Keystreams 709, 711, and 713 correspond to components 703, 705, and 707, respectively.

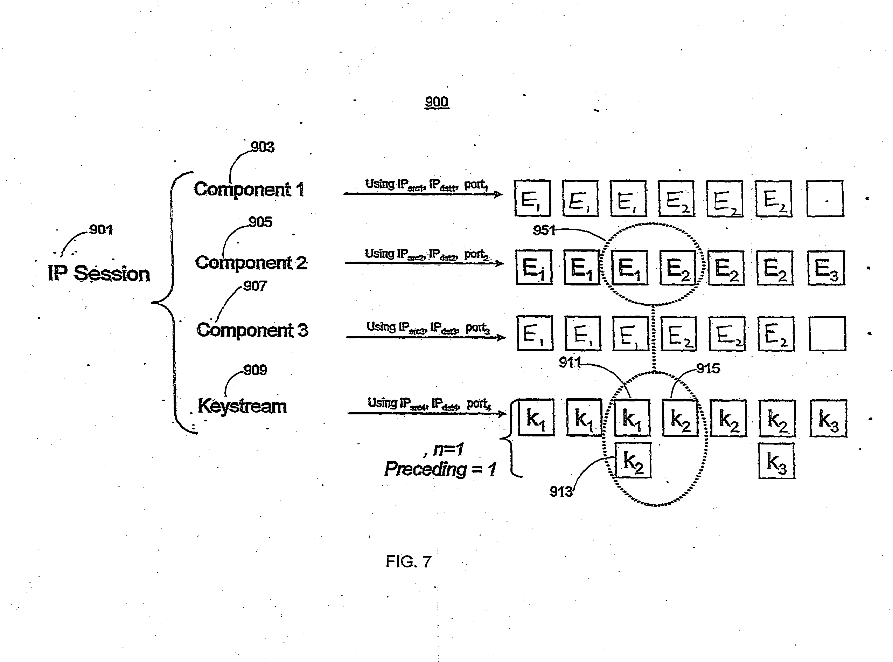

Figure 7 shows a variation of the component configuration shown in Figure 4 according to an embodiment of the invention. Keystream 909 includes the key currently being applied to component 905 for encryption as well as keys that will be subsequently applied when the key transition is within a predetermined incremental time of the current time. For example, before key transition 951, keystream 909 includes both keys k₁ (corresponding to datagram 911) and k₂ (corresponding to datagram 913) and includes only k₂ (corresponding to datagram 915) after the key transition 951. As with component configuration 800, component configuration 900 assists the receiver device to smoothen the effects of key transitions.

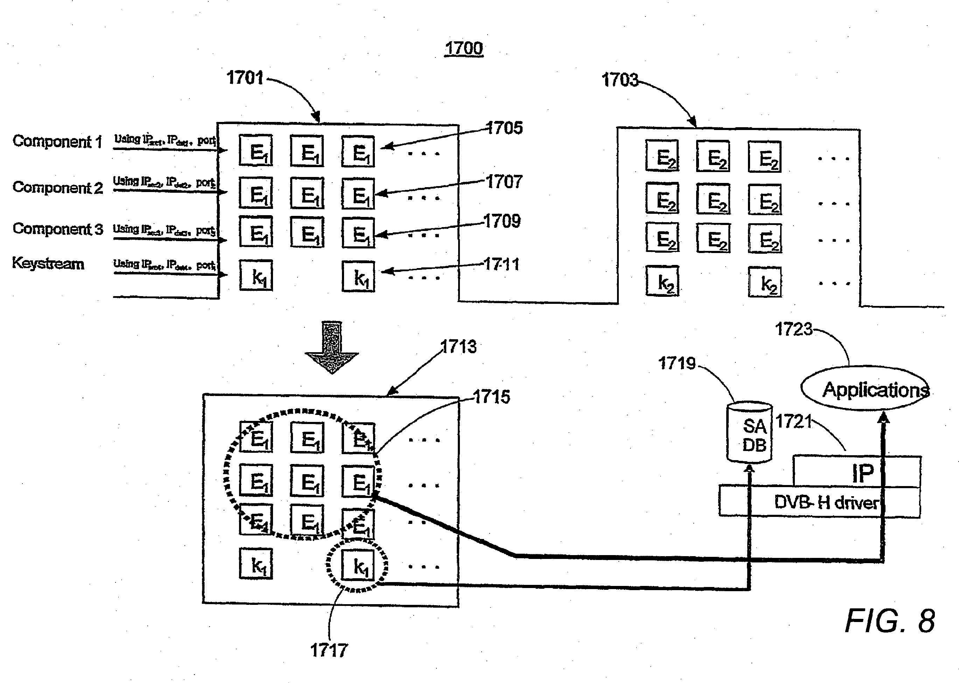

Figure 8 shows an architecture 1700 for receiving a multi-media session in accordance with an embodiment of the invention. With architecture 1700, a receiving device receives time slice burst of data 1701 containing both the IP session components and the keystream related to the session components. Pluralities of content datagrams 1705, 1707, and 1709 correspond to component 1, component 2, and component 3, respectively. A plurality of datagrams 1711 corresponds to the keystream. Time slice burst 1701 is stored in interim buffer 1713 before forwarding the datagrams (packets) to IP stack 1721. The receiving device first extracts the keys (corresponding to datagram 1717) for the received time slice burst 1701 from interim buffer 1713. Second, the receiving device installs the extracted keys to IPSec Security Association (SA) database 1719. Also, the receiving device extracts remaining datagrams 1715 from the interim buffer and forwards them to IP stack 1721. After decryption, the processed datagrams are passed to applications 1723 for the presentation of the multi-media content. Consequently, IP stack 1721 does not reject the content datagrams (unless there are content datagrams that the receiving device did not have a corresponding key as delivered in the current time slice or a previous time slice burst). The process is repeated for a next received time slice burst 1703.

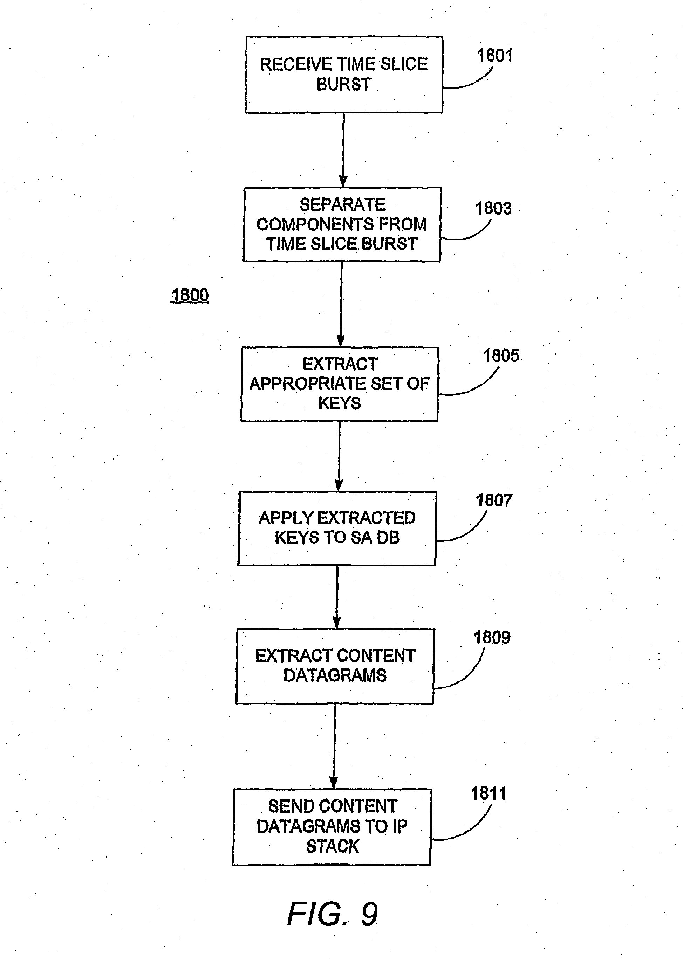

Figure 9 shows flow diagram 1800 for the architecture shown in Figure 8 in accordance with an embodiment of the invention. In step 1801, a receiving device receives a time slice burst over a communications channel, e.g., a wireless channel. In step 1803, the receiving device separates components (e.g., an audio component and a video component) from the received time slice burst. In step 1805, the receiving device extracts the associated set of keys from the keystream. The extracted keys may be applied to content datagrams contained in the time slice burst or in subsequent time slice bursts. Also, the embodiment supports configurations in which different keys are used for different datagrams in the time slice burst. The extracted keys are applied to an IPSec Security Association (SA) database (e.g., SA DB 1719 shown in Figure 8) in steep 1807. In step 1809, the content datagrams are extracted from a buffer (e.g., interim buffer 1713) and sent to an IP stack (e.g., stack 1721) in step 1811. The content datagrams are subsequently decrypted and sent to the corresponding application.

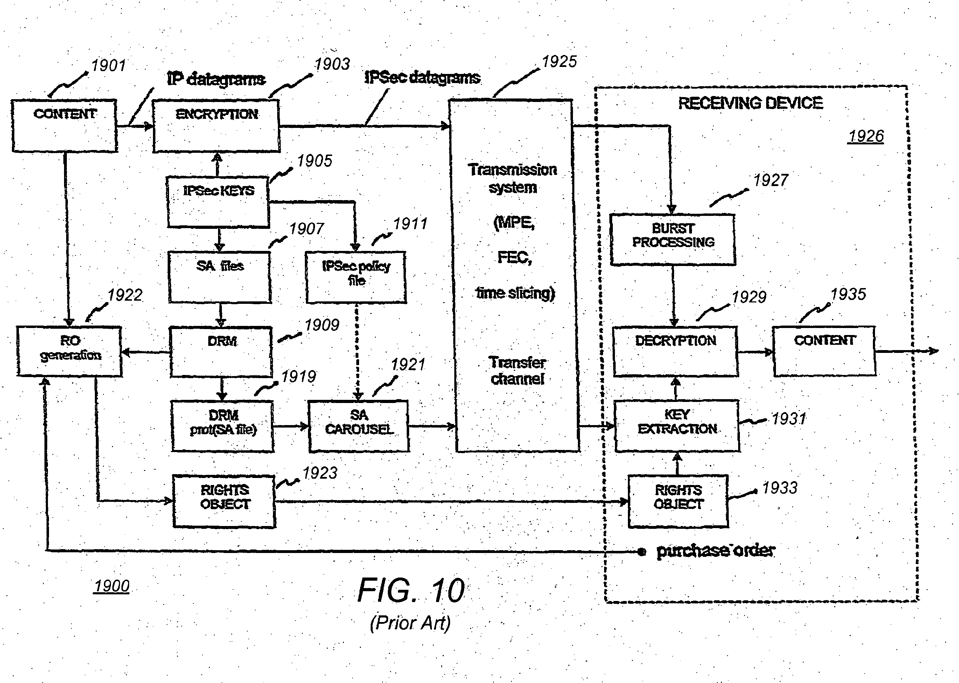

Figure 10 shows a system 1900 for protected content transfer that supports DVB-H IPDC (IP datacast) services according to prior art. System 1900 provides protected content transfer for DVB-H services using IPDC as specified in "Interim DVB-H IP Datacast Specifications: IP Datacast Baseline Specification: Specification of Interface I_MT", DVB Document A080, April 2004. In accordance with this specification, portions of security associated data are transmitted in an electronic service directory (ESG) in SA carousel 1921 as DRM protected SA file 1919 (which is provided by digital rights manager (DRM) 1909 by performing the protection function) and IPSec policy file 1911. As the carousel data is typically updated infrequently (e.g., once a day) system 1900 does not provide an efficient solution for key delivery, especially if one or more of the keys is updated or frequently changes.

Multi-media content 1901 (corresponding to IP datagrams) is encrypted by encryption module 1903 with IPSec keys 1905 and transmitted (as performed by transmission system 1925) as time slice packets (after multi-protocol encapsulation, FEC emcoding, and time slice burst formation) to receiving device 1926. Rights object (RO) 1923 (which is provided by rights object generation 1922) is transmitted to receiving device 1926 through an interaction channel, in which receiving device 1926 is provided with a means for bidirectional communications, e.g., mobile phone functionality. A user of receiving device 1926 may order service (content) and consequently receive the corresponding rights object (RO) 1933, which allows the user to decrypt the content of the ordered service. In the embodiment, rights object 1933 typically does not contain IPSec keys 1905.

Receiving device 1926 processes time slice bursts with burst processing module 1927. Received packets are decrypted by decryption module 1929 with a key provided by key extraction module 1931 in order to obtain content 1935. The keys are determined from rights object 1933. The keys are typically delivered in a SA carousel as DRM protected SA files. Rights object 1933 allows receiving device 1926 to extract the keys.

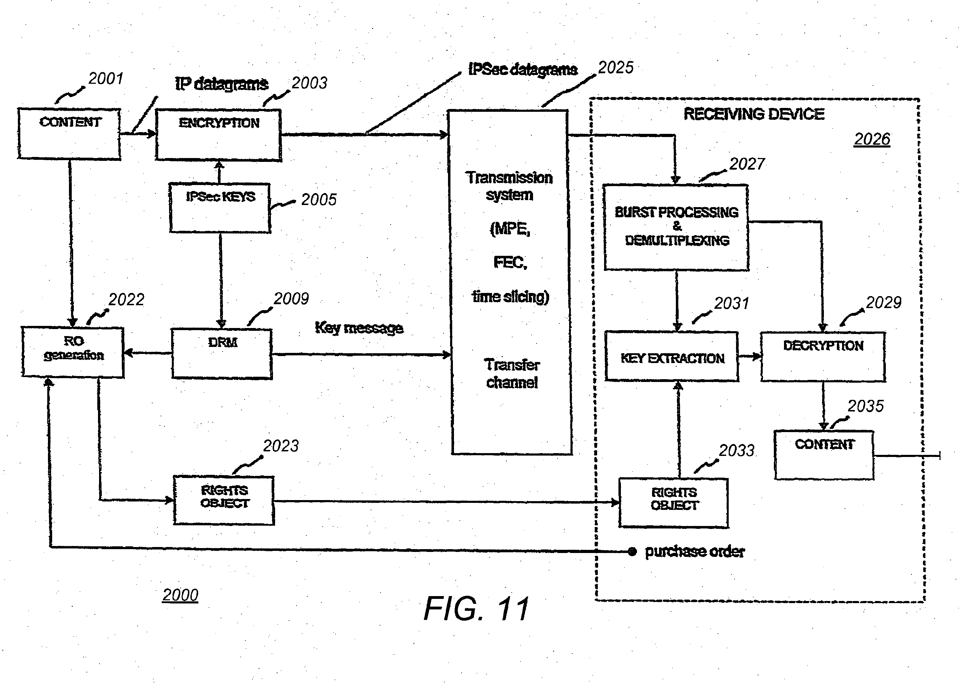

Figure 11 shows a system 2000 that supports DVB-H IPDC services in accordance with an embodiment of the invention. Multi-media content 2001 (corresponding to content datagrams) is encrypted by encryption module 2003 by applying IPSec keys 2005. Transmission system 2025 obtains both encrypted content datagrams from encryption module 2003 and the corresponding keys from DRM 2009. Transmission system 2025 forms corresponding datagrams that contain the keys corresponding to encrypting the content datagrams. Transmission system 2025 inserts both the encrypted content datagrams and the corresponding datagrams into a time slice burst, which is transmitted to receiving device 2026 over a communications channel. While Figure 11 does not explicitly show a radio module, the embodiment may provide wireless signal capability in order to transmit the time slice burst to receiving device 2026 over a wireless channel.

Receiving device 2026 processes a received time slice burst, in which the encrypted content datagrams and corresponding datagrams (containing the corresponding keys that are used for encrypting the received content datagrams) are separated (demultiplexed) by burst processing module 2027. In the embodiment, receiving device 2026 comprises a broadband receiver for receiving DVB signals that include time slice bursts and a transceiver for bidirectional communications in a wireless network. The bidirectional communications supports service ordering by a user, OMA messaging, and security plug-in module installation. The embodiment supports different signal configurations, in which the keys are included in a separate keystream or in which keys are included in multi-media components as previously discussed with Figures 4-7. Key extraction module 2031 extracts the keys from the corresponding datagrams in order to decrypt the content datagrams, as performed by decryption module 2029. Decryption module provides decrypted content 2035 to an application (not shown) so that the content can be presented.

Additionally, rights management object 2023 (as determined by rights object generator 2022) is separately transmitted to receiving device 2026 in response to a purchase order. Consequently, receiving device 2026 receives rights object 2033 to determine if receiving device 2026 is permitted to process the received content.

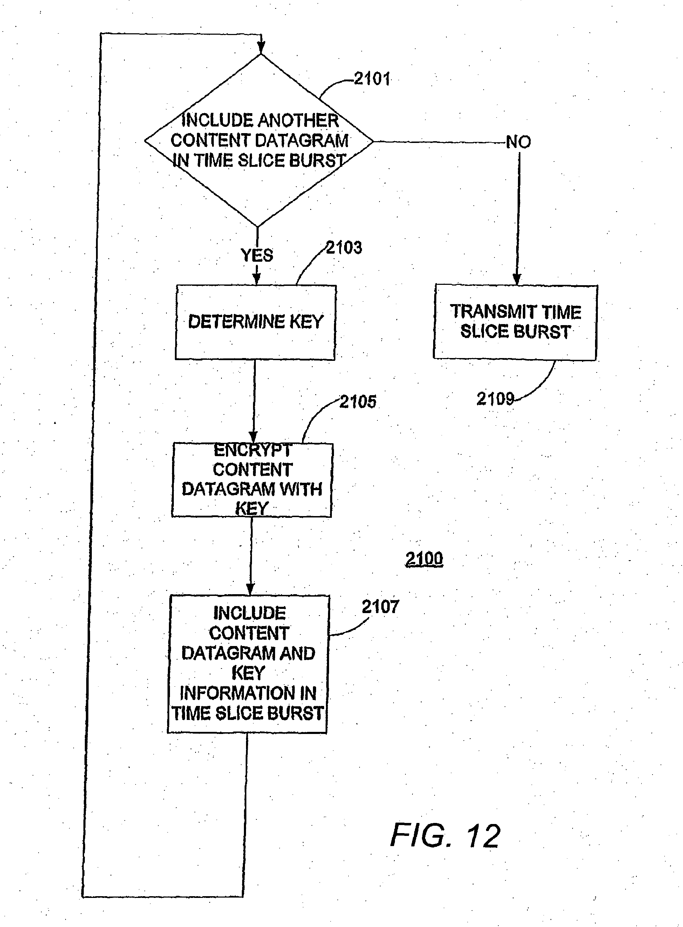

Figure 12 show a flow diagram 2100 for transmitting data for DVB-H IPDC services in system 2000 in accordance with an embodiment of the invention. In step 2101, transmitting apparatus (e.g., transmission system 2025) determines if an obtained content datagram should be included in the current time slice burst. If not, the time slice burst (with previously obtained content datagrams and associated keys) is sent to the receiving device in step 2109.

If the obtained content datagram should be included in the current time slice burst, step 2103 determines the corresponding key and encrypts the content datagram with the key in step 2105. In step 2107 the encrypted content datagram and the corresponding key information (corresponding to a corresponding datagram that may be included in multi-media component or in a keystream) is inserted in the current time slice burst.

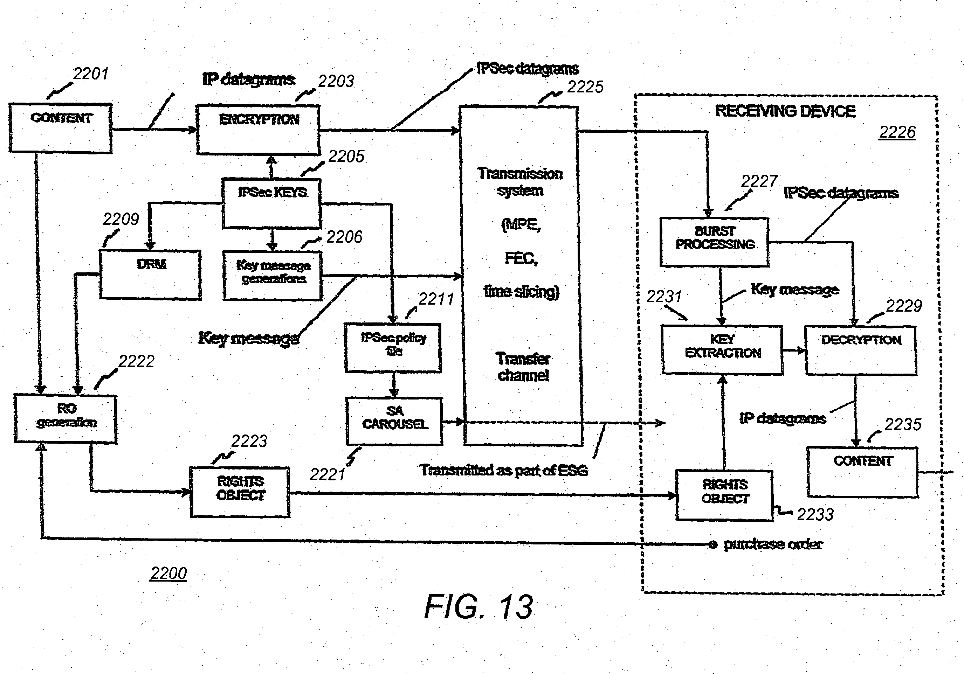

Figure 13 shows a system 2200 that supports DVB-H IPDC services in accordance with an embodiment of the invention. In Figure 13, elements 2201, 2203, 2205, 2222, 2223, 2227, 2229, 2231, 2233, and 2235 correspond to elements 2001, 2003, 2005, 2022, 2023, 2027, 2029, 2031, 2033, and 2035 as shown in Figure 11. As with system 2000, system 2200 transmits content datagrams and corresponding key information in the same time slice burst. Key information is provided to transmission system 2225 by key message generator 2206. Key message generator may further encrypt the keys so that encrypted key information is transmitted to receiving device 2226 by transmission system 2225. DRM 2209, in conjunction with rights object generator 2222, provides rights object 2233 that corresponds to the desired DVB-H IPDC service to receiving device 2226.

IPSec policy files 2211 (that may contain security association information) are separately transmitted in SA carousel 2221 from the service (content) and key messages that are multiplexed and transmitted using IPDC time slicing. In the embodiment, SA carousel 2221 is transmitted as part of the electronic service guide (ESG).

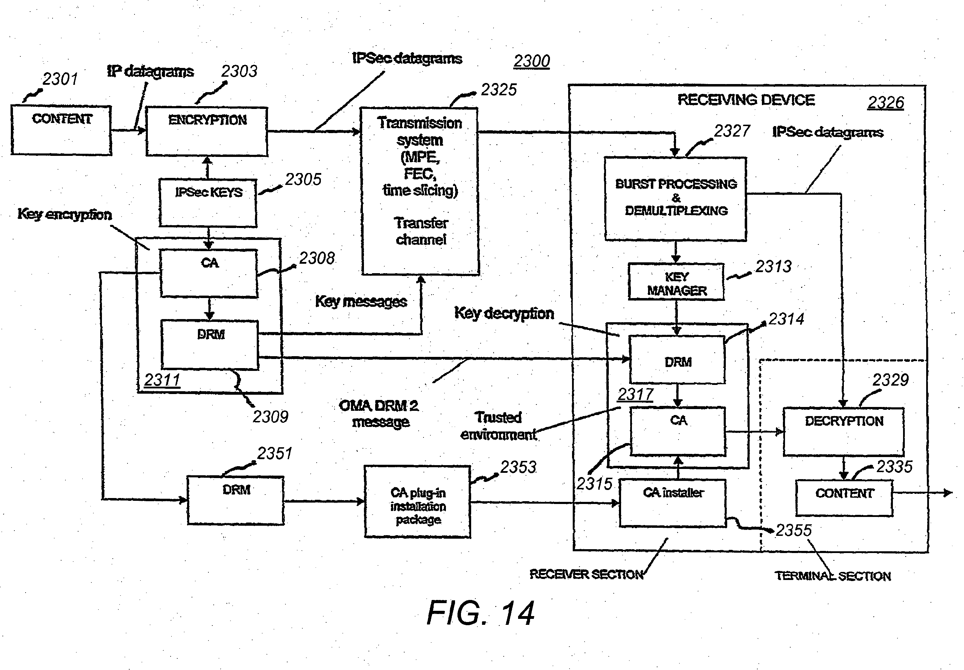

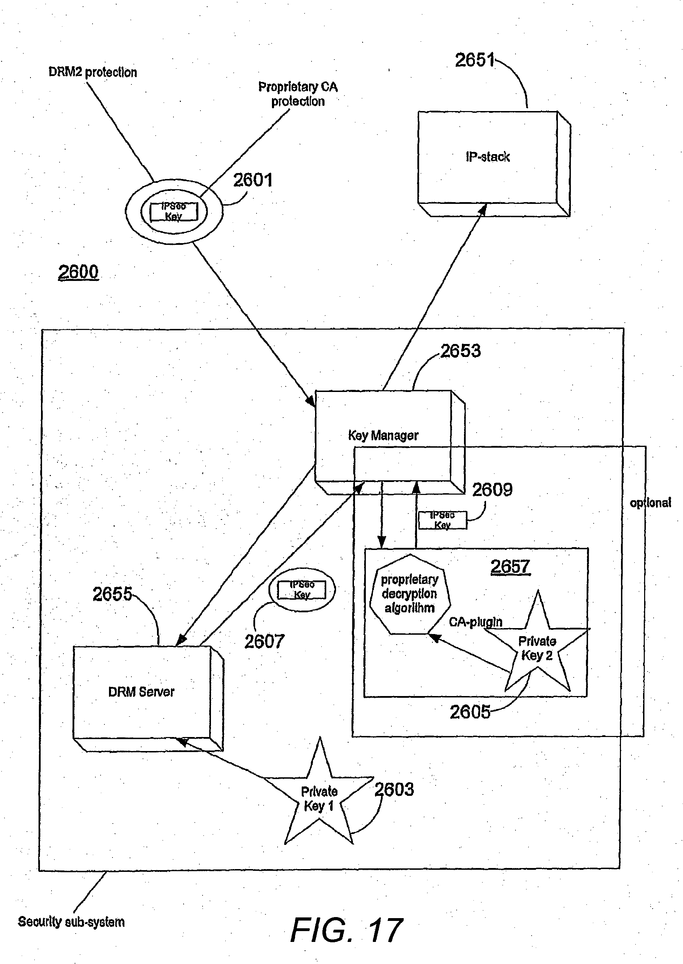

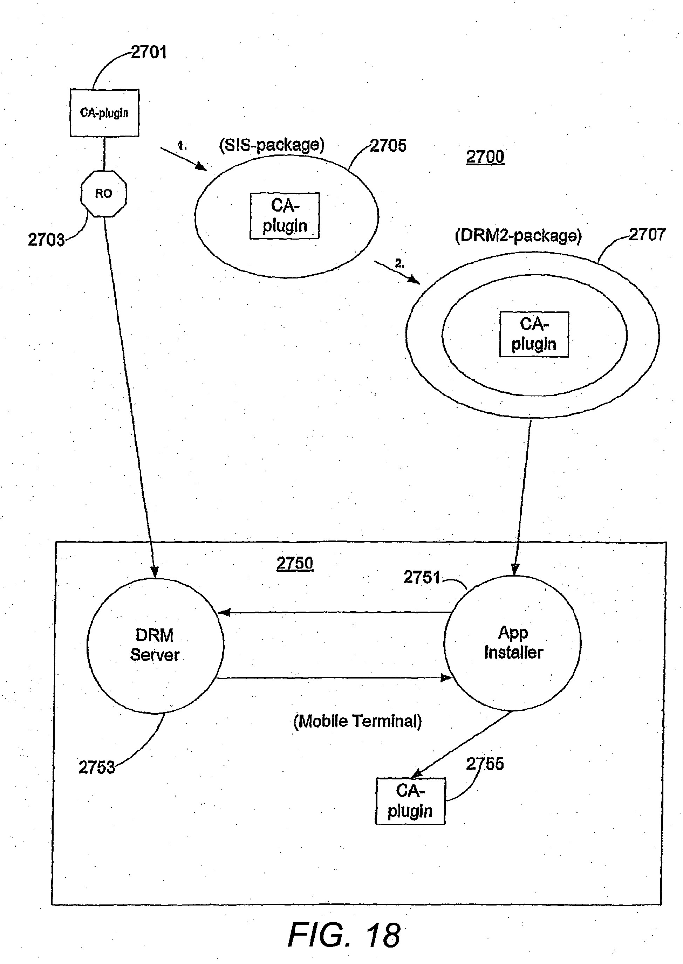

Figure 14 shows a system 2300 that supports DVB-H IPDC services in accordance with an embodiment of the invention. System 2300 supports conditional access (CA) that can provide a second-level of encryption using a corresponding private key. (As will be discussed with Figure 17, IPSec keys may be encrypted by digital rights management (DRM) as well as by a CA module.) Receiving device 2326 comprises a receiver section and a terminal section. The receiver section performs burst processing, demultiplexing, and key management. The receiver section also includes CA plug-in installation and key decryption. DRM 2351 sends CA plug-in installation package 2353 to DRM 2314 so that a new CA plug-in module is installed at receiving device 2326 as will be further discussed with Figure 18. The key decryption is performed in a secure processing environment. The terminal section performs key management and key decryption in addition to the decryption (corresponding to decryption module 2329) and content rendering (corresponding to content 2335).

Encryption of keys 2305 (which are used to encrypt content 2301 by encryption module 2303) is performed by key encryption module 2311. Key encryption module 2311 comprises CA module 2308 and DRM 2309. Thus, key encryption module 2311 may provide two levels of encryption. Both the encrypted key information and the content datagrams are included in the same time slice burst by transmission system 2325.

Correspondingly, decryption of the received key information is performed by key decryption module 2317. Key decryption module 2317 comprises DRM 2314 and CA module 2315. Key decryption module 2317 performs two levels of decryption that correspond to the two levels of encryption. Burst processing module 2327 decrypts the received content datagrams using the decrypted keys provided by key manager 2313. Received content datagrams are decrypted by decryption module 2329 of the terminal section. Key manager 2313 receives the key information that is demultiplexed by module 2327 and forwards the key information to key decryption module 2317 (which is associated with a trusted environment) for DRM and CA decryption.

In the embodiment, the rights object (RO) is transmitted as an OMA DRM2 message (according to the proposed Open Mobile Alliance Digital Rights Management Version 2.0) from DRM 2309 to DRM 2314. The rights object is typically transmitted separately from the time slice bursts.

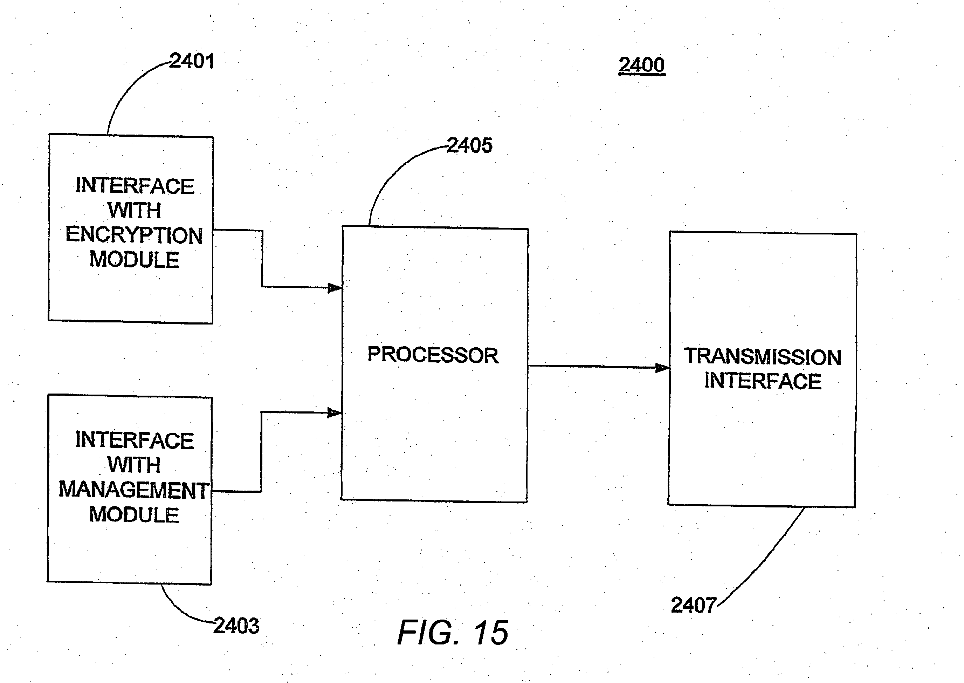

Figure 15 shows apparatus 2400 that supports a transmission system (e.g., 2025, 2225, and 2325) as shown in Figures 11, 13 and 14 in accordance with an embodiment of the invention. In the embodiment, apparatus 2400 performs functions typically associated with a link layer (the second layer of the OSI protocol model). Processor 2405 obtains encrypted datagrams from an encryption module (not shown) through encryption interface 2401 and corresponding key information from a key generator (not shown) through key interface 2403. Transmission interface 2407 encodes the datagrams for forward error correction at the receiving device, performs multi-protocol encapsulation, and formats the time slice burst with the encoded datagrams. (In the embodiment, the datagrams include both content datagrams and corresponding datagrams containing the keys.)

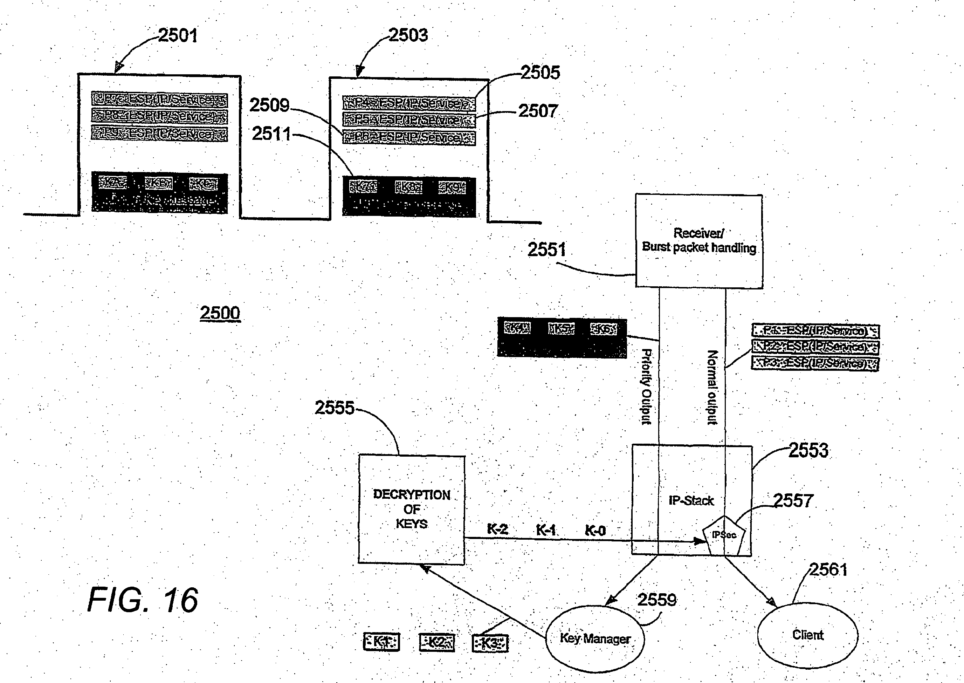

Figure 16 shows apparatus 2500 for a receiving device (e.g., receiving devices 1926, 2026, 2226, and 2326 as shown in Figures 10, 11, 13 and 14, respectively) that receives a multi-media broadcast and that applies IPSec keys in accordance with an embodiment of the invention. Apparatus 2500 processes a time slice burst (e.g., time slice bursts 2501 and 2503) in order to extract the content datagrams and associated keystream. In the embodiment shown in Figure 16, time slice burst 2501 or time slice burst 2503 has content datagrams (e.g., content datagrams 2505, 2507, and 2509) with ESP capsulated IP-packets containing service content and corresponding key datagrams (e.g.; corresponding datagram 2511) comprising UDP key-messages. The keys in an UDP key-message may be protected with DRM.

Apparatus 2500 is capable of distinguishing between service content and key-messages. Consequently, receiver module 2551 separates content datagrams from key datagrams. In the embodiment, key datagrams are given a higher priority level than content datagrams by the transmitting apparatus (not shown). In the embodiment, the priority level associated with a datagram is indicated by a field, e.g., a type of service (ToS) field or a differentiated services field. Thus, key datagrams are sent to IP stack 2553 before corresponding content datagrams so that more time may be allotted for key processing by key decryption module 2555. Key decryption module is presented encrypted keys from IP stack 2553 through key manager 2559.

The decrypted keys are presented to IPSec module 2557 so that the associated content datagrams in IP stack 2553 can be decrypted and presented to client 2561.

Figure 17 shows apparatus 2600 that receives a multi-media broadcast and that decrypts received IPSec keys 2601 in accordance with an embodiment of the invention. Key manager 2653 routes the encrypted IPSec key to DRM server 2655 to decrypt a second-level of encryption using a public decryption algorithm and private key 2603. DRM server 2655 returns second-level decrypted key 2607 to key manager 2653. If the key manager 2653 determines that the key is encrypted with a first-level of encryption, key manager 2653 routes the second-level decrypted key to CA plug-in software module 2657. CA plug-in modules 2657 utilizes a secret decryption algorithm and private key 2605 to decrypt second-level decrypted key 2607. In an embodiment of the invention, the secret decryption algorithm corresponds to a DVB common scrambling algorithm (CSA), which is available from the European Telecommunications Standards Institute (ETSI). CA plug-in software module 2657 returns decrypted key 2609 to key manager 2653, which forwards decrypted key 2609 to IP stack 2651.

In the embodiment, CA plug-in module 2657 performs a first-level of decryption that is optional and that is based on an operator-specific CA-method that includes an associated private key and an associated decryption algorithm. The second-level of encryption is based on an open standard, e.g., OMA DRM2. Because the first-level of encryption is optional, key manager 2653 determines whether a first-level of encryption has been applied to second-level decrypted key 2607. If so, key manager 2653 routes second-level decrypted key 2607 to CA plug-in software module 2657. If not, key manager 2653 routes second-level decrypted key 2607 directly to IP stack 2651 because second-level decrypted key 2607 is completely decrypted.

In the embodiment, key manager 2653 determines whether second-level decrypted key 2607 has been first-level encrypted by examining an associated encryption indicator (not shown), e.g., a header or a message field. The associated encryption indicator indicates 'YES' if second-level decrypted key 2607 has been first-level encrypted and 'NO' if second-level decrypted key 2607 has not been first-level encrypted. If second-level decrypted key 2607 has been first-level encrypted, the associated encryption indicator is not first-level encrypted.

Figure 18 shows system 2700 for deploying a new security plug-in software module 2701 at receiving device 2750 in accordance with an embodiment of the invention. Security plug-in software module 2701 is formatted as an installation package 2705 (e.g., a SIS file as supported by Symbian). Installation package 2705 is protected (e.g., with OMA-DRM2) to form protected package 2707 and delivered to a receiving device using a delivery mechanism. The embodiment supports different communications channels in a delivery mechanism, including a wireless communications channel in which the receiving device is a wireless terminal. The received protected package 2707 is directed to application installer 2751, which is a trusted application. Application installer 2751 extracts new security plug-in software module 2701 from protected package 2707 and replaces current security plug-in software module 2755 that is currently installed at the receiving device 2750 with new security plug-in software module 2701. In order to extract new security plug-in software module 2701, receiving device 2750 receives rights object 2703 that is processed by DRM 2753. Consequently, DRM 2753 indicates to application installer 2751 that security plug-in software module replacement is permitted.

In embodiments of the invention, component configurations as shown in Figures 3-7 may be incorporated in systems as shown in Figures 11, 13 and 14.

As can be appreciated by one skilled in the art, a computer system with an associated computer-readable medium containing instructions for controlling the computer system can be utilized to implement the exemplary embodiments that are disclosed herein. The computer system may include at least one computer such as a microprocessor, digital signal processor, and associated peripheral electronic circuitry.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

## Claims

1. A method comprising:
encrypting a first datagram (309) with a first key (411) and including the first encrypted datagram (415) in a first component (403) of a multi-media session comprising a plurality of media components (201), (203), (205), the first datagram containing content;
transmitting by a communications system the first encrypted datagram of the first component in a time slice burst (1701);
transmitting by the communications system first key information in a datagram of a first keystream in the time slice burst, wherein the first key information contains the first key, and wherein the datagram of the first keystream corresponds to the first encrypted datagram;
and being **characterised in that** it comprises:
encrypting a second datagram with a second key and including the second encrypted datagram in a second component of the multi-media session, the second component containing content associated with the content in the first datagram;
transmitting by the communications system the second encrypted datagram in the time slice burst; and
including the second key in a second datagram of the first keystream in the time slice burst, wherein the second datagram of the first keystream corresponds with the second encrypted datagram.

2. The method of claim 1, wherein: the second encrypted datagram containing the content associated with the content in the first datagram;

3. The method of claim 1, wherein the first keystream includes a subsequent key (813), the subsequent for use in decrypting an encrypted datagram of the first component, which is to be transmitted at a subsequent time.

4. The method of claim 1, wherein the first keystream includes a subsequent key, the subsequent key for use in decrypting an encrypted datagram of the first component, which is to be transmitted within a subsequent predetermined time interval.

5. The method of claim 1, further comprising:
encrypting the first key information before transmitting the first key information.

6. The method of claim 1, wherein through are performed in the communications systems selected from the group consisting of a DVB-H system a DVB-T system, all ATSC system, and an ISDB-T system.

7. The method of claim 1, wherein the first datagram comprises an IP packet.

8. The method of claim 1, wherein the first key comprise an IPSec key.

9. Computer readable medium comprising computer-executable instructions for performing the method of any preceding claim.

10. A method comprising:
receiving by a communications system a time slice burst comprising a first encrypted datagram and first key information, the first encrypted datagram being in a first component of a multi-media session comprising a plurality of media components (201), (203), (205), the first encrypted datagram containing content;
determining a first key from the first key information, processing a first datagram of a first keystream that contains the first key information, and wherein the first datagram of the first keystream corresponds to the first encrypted datagram;
decrypting the first encrypted datagram with the first key; and being **characterised in that** it comprises:
receiving by the communications system a second encrypted datagram and second key information in the time slice burst, the second encrypted datagram being included in another of the plurality of media components, the other of the plurality of media components containing content associated with the content in the first encrypted datagram, the second key information being included in a second datagram of the first keystream;
determining a second key from the second datagram of the first keystream; and
decrypting the second encrypted datagram with the second key.

11. The method of claim 10, wherein the first keystream includes a subsequent key, the subsequent key for use in decrypting an encrypted datagram of the first component, which is to be transmitted at a subsequent time.

12. The method of claim 10, wherein the first keystream includes a subsequent key, the subsequent key for use in decrypting an encrypted datagram of the first component, which is to be transmitted within a subsequent predetermined time interval.

13. The method of claim 10, further comprising:
decrypting the first key before decrypting the first encrypted datagram with the first key.

14. The method of claim 10, performed in a communications systems selected from the group consisting of a DVB-H system, a DVB-T system, an ATSC system, and an ISDB-T system.

15. The method of claim 10, performed in a DVB-T communications system.

16. The method of claim 10, wherein the first datagram comprises an IP packet.

17. The method of claim 10, wherein the first key comprises an IPSec key (1905).

18. Computer readable medium comprising computer-executable instructions for performing the method of any of claims 10 to 17.

19. Apparatus comprising:
means for encrypting a first datagram (309) with a first key (411) and including the first encrypted datagram (415) in a first component (403) of a multi-media session comprising a plurality of media components (201), (203), (205), the first datagram containing content;
a communications system being configured to transmit the first encrypted datagram of the first component in a time slice burst (1701);
the communications system being configured to transmit first key information in a datagram of a first keystream in the time slice burst, wherein the first key information contains the first key, and wherein the datagram of the first keystream corresponds to the first encrypted datagram;
and being **characterised in that** it comprises:
means for encrypting a second datagram with a second key and including the second encrypted datagram in a second component of the multi-media session, the second component containing content associated with the content in the first datagram;
the communications system being configured to transmit the second encrypted datagram in the time slice burst; and
means for including the second key in a second datagram of the first keystream in the time slice burst, wherein the second datagram of the first keystream corresponds with the second encrypted datagram.

20. The apparatus of claim 19, wherein: the second encrypted datagram contains the content associated with the content in the first datagram.

21. The apparatus of claim 19, comprising means for including in the first key stream a subsequent key (813), the subsequent key being for use in decrypting an encrypted datagram of the first component, which is to be transmitted at a subsequent time.

22. The apparatus of claim 19, comprising means for including in the first key stream a subsequent key, the subsequent key being for use in decrypting an encrypted datagram of the first component, which is to be transmitted within a subsequent predetermined time interval.

23. The apparatus of claim 19, further comprising:
means for encrypting the first key information before transmitting the first key information.

24. The apparatus of claim 19, wherein the communications systems is selected from the group consisting of a DVB-H system a DVB-T system, all ATSC system, and an ISDB-T system.

25. The apparatus of claim 19, wherein the first datagram comprises an IP packet.

26. The apparatus of claim 19, wherein the first key comprise an IPSec key.

27. Apparatus comprising:
means for receiving by a communications system a time slice burst comprising a first encrypted datagram and first key information, the first encrypted datagram being in a first component of a multi-media session comprising a plurality of media components (201), (203), (205), the first encrypted datagram containing content;
means for determining a first key from the first key information, processing a first datagram of a first keystream that contains the first key information, and wherein the datagram of the first keystream corresponds to the first encrypted datagram;
means for decrypting the first encrypted datagram with the first key;
and being **characterised in that** it comprises:
the communications system being configured to receive a second encrypted datagram and second key information in the time slice burst, the second encrypted datagram being included in another of the plurality of media components, the other of the plurality of media components containing content associated with the content in the first encrypted datagram, the second key information being included in a second datagram of the first keystream;
means for determining a second key from the second datagram of the first keystream; and
means for decrypting the second encrypted datagram with the second key.

28. The apparatus of claim 27, comprising means for receiving in the first keystream a subsequent key, the subsequent key for use in decrypting an encrypted datagram of the first component, which is to be transmitted at a subsequent time.

29. The apparatus of claim 27, comprising means for receiving in the first keystream a subsequent key, the subsequent key for use in decrypting an encrypted datagram of the first component, which is to be transmitted within a subsequent predetermined time interval.

30. The apparatus of claim 27, further comprising:
means for decrypting the first key.

31. The apparatus of claim 27, wherein the communications systems is selected from the group consisting of a DVB-H system, a DVB-T system, an ATSC system, and an ISDB-T system.

32. The apparatus of claim 27, wherein the first datagram comprises an IP packet.

33. The apparatus of claim 27, wherein the first key comprises an IPSec key (1905).

## Patentansprüche

1. Verfahren, umfassend:
Verschlüsseln eines ersten Datagramms (309) mit einem ersten Schlüssel (411) und Aufnehmen des ersten verschlüsselten Datagramms (415) in eine erste Komponente (403) einer Multimediasitzung, die mehrere Medienkomponenten (201), (203), (205) umfasst, wobei das erste Datagramm Inhalt enthält;
Senden des ersten verschlüsselten Datagramms der ersten Komponente durch ein Kommunikationssystem in einem Zeitscheiben-Burst (1701);
Senden von ersten Schlüsselinformationen durch das Kommunikationssystem in einem Datagramm eines ersten Schlüsselstroms in dem Zeitscheiben-Burst, wobei die ersten Schlüsselinformationen den ersten Schlüssel enthalten und wobei das Datagramm des ersten Schlüsselstroms dem ersten verschlüsselten Datagramm entspricht;
und **dadurch gekennzeichnet, dass** es Folgendes umfasst:
Verschlüsseln eines zweiten Datagramms mit einem zweiten Schlüssel und Aufnehmen des zweiten verschlüsselten Datagramms in eine zweite Komponente der Multimediasitzung, wobei die zweite Komponente Inhalt enthält, der mit dem Inhalt in dem ersten Datagramm assoziiert ist;
Senden des zweiten verschlüsselten Datagramms durch das Kommunikationssystem in dem Zeitscheiben-Burst; und
Aufnehmen des zweiten Schlüssels in ein zweites Datagramm des ersten Schlüsselstroms in dem Zeitscheiben-Burst, wobei das zweite Datagramm des ersten Schlüsselstroms mit dem zweiten verschlüsselten Datagramm korrespondiert.

2. Verfahren nach Anspruch 1, wobei das zweite verschlüsselte Datagramm den Inhalt enthält, der mit dem Inhalt in dem ersten Datagramm assoziiert ist.

3. Verfahren nach Anspruch 1, wobei der erste Schlüsselstrom einen nachfolgenden Schlüssel (813) umfasst, wobei der nachfolgende Schlüssel zur Verwendung beim Entschlüsseln eines verschlüsselten Datagramms der ersten Komponente dient, das zu einem nachfolgenden Zeitpunkt zu senden ist.

4. Verfahren nach Anspruch 1, wobei der erste Schlüsselstrom einen nachfolgenden Schlüssel umfasst, wobei der nachfolgende Schlüssel zur Verwendung beim Entschlüsseln eines verschlüsselten Datagramms der ersten Komponente dient, das in einem nachfolgenden vorbestimmten Zeitintervall zu senden ist.

5. Verfahren nach Anspruch 1, ferner umfassend:
Verschlüsseln der ersten Schlüsselinformationen vor dem Senden der ersten Schlüsselinformationen.

6. Verfahren nach Anspruch 1, durchgeführt in den aus der folgenden Gruppe ausgewählten Kommunikationssystemen: ein DVB-H-System, ein DVB-T-System, ein reines ATSC-System und ein ISDB-T-System.

7. Verfahren nach Anspruch 1, wobei das erste Datagramm ein IP-Paket umfasst.

8. Verfahren nach Anspruch 1, wobei der erste Schlüssel einen IPSec-Schlüssel umfasst.

9. Computerlesbares Medium, das Anweisungen zum Ausführen des Verfahrens nach einem der vorhergehenden Ansprüche umfasst.

10. Verfahren, umfassend:
Empfangen eines Zeitscheiben-Bursts durch ein Kommunikationssystem, der ein erstes verschlüsseltes Datagramm und erste Schlüsselinformationen umfasst, wobei sich das erste verschlüsselte Datagramm in einer ersten Komponente einer Multimediasitzung befindet, die mehrere Medienkomponenten (201), (203), (205) umfasst, wobei das erste verschlüsselte Datagramm Inhalt enthält;
Bestimmen eines ersten Schlüssels aus den ersten Schlüsselinformationen, Verarbeiten eines ersten Datagramms eines ersten Schlüsselstroms, der die ersten Schlüsselinformationen enthält, und wobei das erste Datagramm des ersten Schlüsselstroms dem ersten verschlüsselten Datagramm entspricht;
Entschlüsseln des ersten verschlüsselten Datagramms mit dem ersten Schlüssel;
und **dadurch gekennzeichnet, dass** es Folgendes umfasst:
Empfangen eines zweiten verschlüsselten Datagramms und von zweiten Schlüsselinformationen durch das Kommunikationssystem in dem Zeitscheiben-Burst, wobei das zweite verschlüsselte Datagramm in einer anderen der mehreren Medienkomponenten enthalten ist, wobei die anderen der mehreren Medienkomponenten Inhalt enthalten, der mit dem Inhalt in dem ersten verschlüsselten Datagramm assoziiert ist, wobei die zweiten Schlüsselinformationen in einem zweiten Datagramm des ersten Schlüsselstroms enthalten sind;
Bestimmen eines zweiten Schlüssels aus dem zweiten Datagramm des ersten Schlüsselstroms; und
Entschlüsseln des zweiten verschlüsselten Datagramms mit dem zweiten Schlüssel.

11. Verfahren nach Anspruch 10, wobei der erste Schlüsselstrom einen nachfolgenden Schlüssel umfasst, wobei der nachfolgende Schlüssel zur Verwendung beim Entschlüsseln eines verschlüsselten Datagramms der ersten Komponente dient, das an einem nachfolgenden Zeitpunkt zu senden ist.

12. Verfahren nach Anspruch 10, wobei der erste Schlüsselstrom einen nachfolgenden Schlüssel umfasst, wobei der nachfolgende Schlüssel zur Verwendung beim Entschlüsseln eines verschlüsselten Datagramms der ersten Komponente dient, das in einem nachfolgenden vorbestimmten Zeitintervall zu senden ist.

13. Verfahren nach Anspruch 10, ferner umfassend:
Entschlüsseln des ersten Schlüssels vor dem Entschlüsseln des ersten verschlüsselten Datagramms mit dem ersten Schlüssel.

14. Verfahren nach Anspruch 10, das in einem Kommunikationssystem ausgeführt wird, das aus der folgenden Gruppe ausgewählt ist: ein DVB-H-System, ein DVB-T-System, ein ATSC-System und ein ISDB-T-System.

15. Verfahren nach Anspruch 10, das in einem DVB-T-Kommunikationssystem ausgeführt wird.

16. Verfahren nach Anspruch 10, wobei das erste Datagramm ein IP-Paket umfasst.

17. Verfahren nach Anspruch 10, wobei der erste Schlüssel einen IPSec-Schlüssel (1905) umfasst.

18. Computerlesbares Medium, das computerausführbare Anweisungen zum Ausführen des Verfahrens nach einem der Ansprüche 10 bis 17 umfasst.

19. Vorrichtung, umfassend:
Mittel zum Verschlüsseln eines ersten Datagramms (309) mit einem ersten Schlüssel (411) und Aufnehmen des ersten verschlüsselten Datagramms (415) in eine erste Komponente (403) einer Multimediasitzung, die mehrere Medienkomponenten (201), (203), (205) umfasst, wobei das erste Datagramm Inhalt enthält;
ein Kommunikationssystem, ausgelegt zum Senden des ersten verschlüsselten Datagramms der ersten Komponente in einem ersten Zeitscheiben-Burst (1701);
wobei das Kommunikationssystem ausgelegt ist zum Senden von ersten Schlüsselinformationen in einem Datagramm des ersten Schlüsselstroms in dem Zeitscheiben-Burst, wobei die ersten Schlüsselinformationen den ersten Schlüssel enthalten und wobei das Datagramm des ersten Schlüsselstroms dem ersten verschlüsselten Datagramm entspricht;
und **dadurch gekennzeichnet, dass** sie Folgendes umfasst:
Mittel zum Verschlüsseln eines zweiten Datagramms mit einem zweiten Schlüssel und Aufnehmen des zweiten verschlüsselten Datagramms in eine zweite Komponente der Multimediasitzung, wobei die zweite Komponente Inhalt enthält, der mit dem Inhalt in dem ersten Datagramm assoziiert ist;
wobei das Kommunikationssystem ausgelegt ist zum Senden des zweiten verschlüsselten Datagramms in dem Zeitscheiben-Burst; und
Mittel zum Aufnehmen des zweiten Schlüssels in ein zweites Datagramm des ersten Schlüsselstroms in dem Zeitscheiben-Burst, wobei das zweite Datagramm des ersten Schlüsselstroms mit dem zweiten verschlüsselten Datagramm korrespondiert.

20. Vorrichtung nach Anspruch 19, wobei das zweite verschlüsselte Datagramm den Inhalt enthält, der mit dem Inhalt in dem ersten Datagramm assoziiert ist.

21. Vorrichtung nach Anspruch 19, die Mittel zum Aufnehmen eines nachfolgenden Schlüssels (813) in den ersten Schlüsselstrom umfasst, wobei der nachfolgende Schlüssel zur Verwendung beim Entschlüsseln eines verschlüsselten Datagramms der ersten Komponente dient, das zu einem nachfolgenden Zeitpunkt zu senden ist.

22. Vorrichtung nach Anspruch 19, die Mittel zum Aufnehmen eines nachfolgenden Schlüssels in den ersten Schlüsselstrom umfasst, wobei der nachfolgende Schlüssel zur Verwendung beim Entschlüsseln eines verschlüsselten Datagramms der ersten Komponente dient, das in einem nachfolgenden vorbestimmten Zeitintervall zu senden ist.

23. Vorrichtung nach Anspruch 19, ferner umfassend:
Mittel zum Verschlüsseln der ersten Schlüsselinformationen vor dem Senden der ersten Schlüsselinformationen.

24. Vorrichtung nach Anspruch 19, wobei das Kommunikationssystem aus der folgenden Gruppe ausgewählt ist: einem DVB-H-System, einem DVB-T-System, einem reinen ATSC-System und einem ISDB-T-System.

25. Vorrichtung nach Anspruch 19, wobei das erste Datagramm ein IP-Paket umfasst.

26. Vorrichtung nach Anspruch 19, wobei der erste Schlüssel einen IPSec-Schlüssel umfasst.

27. Vorrichtung, umfassend:
Mittel zum Empfangen eines Zeitscheiben-Bursts durch ein Kommunikationssystem, der ein erstes verschlüsseltes Datagramm und erste Schlüsselinformationen umfasst, wobei sich das erste verschlüsselte Datagramm in einer ersten Komponente einer Multimediasitzung befindet, die mehrere Medienkomponenten (201), (203), (205) umfasst, wobei das erste verschlüsselte Datagramm Inhalt enthält;
Mittel zum Bestimmen eines ersten Schlüssels aus den ersten Schlüsselinformationen, Verarbeiten eines ersten Datagramms eines ersten Schlüsselstroms, der die ersten Schlüsselinformationen enthält, und wobei das erste Datagramm des ersten Schlüsselstroms dem ersten verschlüsselten Datagramm entspricht;
Mittel zum Entschlüsseln des ersten verschlüsselten Datagramms mit dem ersten Schlüssel;
und **dadurch gekennzeichnet, dass** sie Folgendes umfasst:
das Kommunikationssystem ist ausgelegt zum Empfangen eines zweiten verschlüsselten Datagramms und von zweiten Schlüsselinformationen in dem Zeitscheiben-Burst, wobei das zweite verschlüsselte Datagramm in einer anderen der mehreren Medienkomponenten enthalten ist, wobei die anderen der mehreren Medienkomponenten Inhalt enthalten, der mit dem Inhalt in dem ersten verschlüsselten Datagramm assoziiert ist, wobei die zweiten Schlüsselinformationen in einem zweiten Datagramm des ersten Schlüsselstroms enthalten sind;
Mittel zum Bestimmen eines zweiten Schlüssels aus dem zweiten Datagramm des ersten Schlüsselstroms; und
Mittel zum Entschlüsseln des zweiten verschlüsselten Datagramms mit dem zweiten Schlüssel.

28. Vorrichtung nach Anspruch 27, die Mittel zum Empfangen eines nachfolgenden Schlüssels in dem ersten Schlüsselstrom umfasst, wobei der nachfolgende Schlüssel zur Verwendung beim Entschlüsseln eines verschlüsselten Datagramms der ersten Komponente dient, das zu einem späteren Zeitpunkt zu senden ist.

29. Vorrichtung nach Anspruch 27, die Mittel zum Empfangen eines nachfolgenden Schlüssels in dem ersten Schlüsselstrom umfasst, wobei der nachfolgende Schlüssel zur Verwendung beim Entschlüsseln eines verschlüsselten Datagramms der ersten Komponente dient, das in einem nachfolgenden vorbestimmten Zeitintervall zu senden ist.

30. Vorrichtung nach Anspruch 27, ferner umfassend:
Mittel zum Entschlüsseln des ersten Schlüssels.

31. Vorrichtung nach Anspruch 27, wobei die Kommunikationssysteme aus der folgenden Gruppe ausgewählt sind: ein DVB-H-System, ein DVB-T-System, ein ATSC-System und ein ISDB-T-System.

32. Vorrichtung nach Anspruch 27, wobei das erste Datagramm ein IP-Paket umfasst.

33. Vorrichtung nach Anspruch 27, wobei der erste Schlüssel einen IPSec-Schlüssel (1905) umfasst.

## Revendications

1. Procédé comprenant :
le cryptage d'un premier datagramme (309) grâce à une première clé (411) incluant le premier datagramme crypté (415) dans la première composante (403) d'une session multimédia comprenant une pluralité de composantes multimédia (201), (203), (205), le premier datagramme renfermant un contenu,
la transmission par un système de communication du premier datagramme crypté de la première composante dans une salve de tranche de temps (1701),
la transmission par le système de communication d'informations sur une première clé dans un datagramme d'un premier flot de clés dans la salve de tranche de temps, les informations sur la première clé renfermant la première clé et le datagramme du premier flot de clés correspondant au premier datagramme crypté,
et **caractérisé en ce qu'**il comprend :
le cryptage d'un second datagramme grâce à une seconde clé et incluant le second datagramme crypté dans une seconde composante de la session multimédia, la seconde composante renfermant un contenu associé au contenu du premier datagramme,
la transmission par le système de communication du second datagramme crypté dans la salve de tranche de temps, et
l'inclusion de la seconde clé dans le second datagramme du premier flot de clés dans la salve de tranche de temps, le second datagramme du premier flot de clés correspondant au second datagramme crypté.

2. Procédé selon la revendication 1, dans lequel le second datagramme crypté renferme le contenu associé au contenu dans le premier datagramme.

3. Procédé selon la revendication 1, dans lequel le premier flot de clés inclut une clé suivante (813), la clé suivante étant destinée à être utilisée dans le décryptage d'un datagramme crypté de la première composante, laquelle doit être transmise à un instant suivant.

4. Procédé selon la revendication 1, dans lequel le premier flot de clés inclut une clé suivante, la clé suivante étant destinée à être utilisée dans le décryptage d'un datagramme crypté de la première composante, laquelle doit être transmise dans un intervalle de temps suivant prédéterminé.

5. Procédé selon la revendication 1, comprenant en outre :
le cryptage des premières informations de clé avant l'émission des premières informations de clé.

6. Procédé selon la revendication 1, dans lequel ce qui précède est exécuté dans les systèmes de communication sélectionnés à partir du groupe constitué : d'un système de type DVB-H, d'un système de type DVB-T, de tout système ATSC et d'un système ISDB-T.

7. Procédé selon la revendication 1, dans lequel le premier datagramme comprend un paquet au protocole IP.

8. Procédé selon la revendication 1, dans lequel la première clé comprend une clé de type IPSec.

9. Support pouvant être lu par ordinateur comprenant des instructions exécutables par ordinateur permettant d'exécuter le procédé selon l'une quelconque des revendications précédentes.

10. Procédé comprenant :
la réception par un système de communication d'une salve de tranche de temps comprenant un premier datagramme crypté et des informations sur une première clé, le premier datagramme crypté se trouvant dans la première composante d'une session multimédia comprenant une pluralité de composantes multimédia (201), (203), (205), le premier datagramme crypté renfermant un contenu,
la détermination d'une première clé à partir des informations sur la première clé, le traitement du premier datagramme d'un premier flot de clés qui contient des informations sur la première clé, et le premier datagramme du premier flot de clés correspondant au premier datagramme crypté,
et **caractérisé en ce qu'**il comprend :
la réception par le système de communication d'un second datagramme crypté et d'informations sur une seconde clé dans la salve de tranche de temps, le second datagramme crypté étant inclus dans une autre de la pluralité de composantes multimédia, l'autre de la pluralité de composantes multimédia renfermant un contenu associé au contenu du premier datagramme crypté, les informations sur la seconde clé étant incluses dans un second datagramme du premier flot de clés,
la détermination d'une seconde clé à partir du second datagramme du premier flot de clés, et
le décryptage du second datagramme crypté grâce à la seconde clé.

11. Procédé selon la revendication 10, dans lequel le premier flot de clés inclut une clé suivante, la clé suivante étant destinée à être utilisée dans le décryptage d'un datagramme crypté de la première composante, laquelle doit est transmise à un instant suivant.

12. Procédé selon la revendication 10, dans lequel le premier flot de clés inclut une clé suivante, la clé suivante étant destinée à être utilisée dans le décryptage d'un datagramme crypté de la première composante, laquelle doit est transmise dans un intervalle de temps suivant prédéterminé.

13. Procédé selon la revendication 10, comprenant en outre :
le décryptage de la première clé avant le décryptage du premier datagramme crypté avec la première clé.

14. Procédé selon la revendication 10, exécuté dans un système de communication sélectionné à partir du groupe constitué : d'un système de type DVB-H, d'un système de type DVB-T, d'un système ATSC et d'un système ISDB-T.

15. Procédé selon la revendication 10, exécuté dans un système de communication de type DVB-T.

16. Procédé selon la revendication 10, dans lequel le premier datagramme comprend un paquet au protocole IP.

17. Procédé selon la revendication 10, dans lequel la première clé comprend une clé de type IPSec (1905).

18. Support pouvant être lu par un ordinateur comprenant des instructions exécutables par ordinateur permettant d'exécuter le procédé selon l'une quelconque des revendications 10 à 17.

19. Appareil comprenant :
un moyen permettant de crypter un premier datagramme (309) grâce à une première clé (411) et incluant le premier datagramme crypté (415) dans la première composante (403) d'une première session multimédia comprenant une pluralité de composantes multimédia (201), (203), (205), le premier datagramme renfermant un contenu,
un système de communication configuré pour transmettre le premier datagramme crypté de la première composante dans une salve de tranche de temps (1701),
le système de communication étant configuré pour transmettre des informations sur une première clé dans un datagramme d'un premier flot de clés dans la salve de tranche de temps, les informations sur la première clé contenant la première clé et le datagramme du premier flot de clés correspondant au premier datagramme crypté,
et **caractérisé en ce qu'**il comprend :
un moyen permettant de crypter un second datagramme grâce à une seconde clé et incluant le second datagramme crypté dans une seconde composante de la session multimédia, la seconde composante renfermant un contenu associé au contenu du premier datagramme,
le système de communication étant configuré pour transmettre le second datagramme crypté dans la salve de tranche de temps, et
un moyen permettant d'inclure la seconde clé dans un second datagramme du premier flot de clés dans la salve de tranche de temps, le second datagramme du premier flot de clés correspondant au second datagramme crypté.

20. Appareil selon la revendication 19, dans lequel le second datagramme crypté renferme le contenu associé au contenu du premier datagramme.

21. Appareil selon la revendication 19, comprenant un moyen permettant d'inclure dans le premier flot de clés une clé suivante (813), la clé suivante étant destinée à être utilisée dans le décryptage d'un datagramme crypté de la première composante, laquelle doit est transmise à un instant suivant.

22. Appareil selon la revendication 19, comprenant un moyen permettant d'inclure dans le premier flot de clés une clé suivante, la clé suivante étant destinée à être utilisée dans le décryptage d'un datagramme crypté de la première composante, laquelle doit être transmise dans un intervalle de temps suivant prédéterminé.

23. Appareil selon la revendication 19, comprenant en outre :
un moyen permettant de crypter les informations sur la première clé avant de transmettre les informations sur la première clé.

24. Appareil selon la revendication 19, dans lequel les systèmes de communication sont sélectionnés à partir du groupe constitué : d'un système de type DVB-H, d'un système de type DVB-T, de tout système ATSC et d'un système ISDB-T.

25. Appareil selon la revendication 19, dans lequel le premier datagramme comprend un paquet au protocole IP.

26. Appareil selon la revendication 19, dans lequel la première clé comprend une clé de type IPSec.

27. Appareil comprenant :
un moyen permettant de recevoir grâce à un système de communication une salve de tranche de temps comprenant un premier datagramme crypté et des informations sur une première clé, le premier datagramme crypté se trouvant dans la première composante d'une session multimédia comprenant une pluralité de composantes multimédia (201), (203), (205), le premier datagramme crypté renfermant un contenu,
un moyen permettant de déterminer une première clé à partir des informations sur la première clé, de traiter le premier datagramme d'un premier flot de clés qui contient les informations sur la première clé et le datagramme du premier flot de clés correspondant au premier datagramme crypté,
un moyen permettant de décrypter le premier datagramme crypté grâce à la première clé,
et étant **caractérisé en ce qu'**il comprend :
le système de communication configuré pour recevoir un second datagramme crypté et des informations sur une seconde clé dans la salve de tranche de temps, le second datagramme crypté étant inclus dans une autre de la pluralité de composantes multimédia, l'autre de la pluralité de composantes multimédia renfermant le contenu associé au contenu du premier datagramme crypté, les informations sur la seconde clé étant incluses dans un second datagramme du premier flot de clés,
un moyen permettant de déterminer une seconde clé à partir du second datagramme du premier flot de clés, et
un moyen permettant de décrypter le second datagramme crypté grâce à la seconde clé.

28. Appareil selon la revendication 27, comprenant un moyen permettant de recevoir une clé suivante dans le premier flot de clés, la clé suivante étant destinée à être utilisée dans le décryptage d'un datagramme crypté de la première composante, laquelle doit être transmise à un instant suivant.

29. Appareil selon la revendication 27, comprenant un moyen permettant de recevoir une clé suivante dans le premier flot de clés, la clé suivante étant destinée à être utilisée dans le décryptage d'un datagramme crypté de la première composante, laquelle doit être transmise dans un intervalle de temps suivant prédéterminé.

30. Appareil selon la revendication 27, comprenant en outre :
un moyen permettant de décrypter la première clé.

31. Appareil selon la revendication 27, dans lequel le système de communication est sélectionné à partir du groupe constitué : d'un système de type DVB-H, d'un système de type DVB-T, de tout système ATSC et d'un système ISDB-T.

32. Appareil selon la revendication 27, dans lequel le premier datagramme comprend un paquet au protocole IP.

33. Appareil selon la revendication 27, dans lequel la première clé comprend une clé de type IPSec (1905).
